# EUROPEAN PATENT APPLICATION

(11) **EP 3 395 623 A1**
(43) Date of publication of application: **31.10.2018**
(21) Application number: 18169001.7
(22) Date of filing: 24.04.2018
(51) Int. Cl.: B60S 1/04, B60S 1/08

(54) **METHOD, DEVICE AND APPARATUS FOR CONTROLLING WINDSCREEN WIPER, AND VEHICLE**

(30) Priority: 24.04.2017 CN 201710272324
(71) Applicant: Beijing Xiaomi Mobile Software Co., Ltd., Beijing 100085 (CN)
(72) Inventor: XIE, Yan, Beijing, Beijing 100085 (CN)
(74) Representative: dompatent von Kreisler Selting Werner - Partnerschaft von Patent- und Rechtsanwälten mbB

(57) **Abstract**

The present disclosure relates to a method, device and apparatus for controlling a windscreen wiper, and a vehicle. The method for controlling a windscreen wiper includes: acquiring (S11) information about an environment where the vehicle is located, the information about the environment where the vehicle is located including information about an environmental temperature; determining (S12) whether the vehicle is in a service state or an out-of-service state; determining (S13) whether the environmental temperature is less than or equal to a preset temperature value according to the information about the environmental temperature; and when the vehicle is in the out-of-service state and the environmental temperature is less than or equal to the preset temperature value, controlling (S14) the windscreen wiper of the vehicle to be raised in a direction away from a windscreen of the vehicle.

## Description

### TECHNICAL FIELD

The present disclosure relates to the technical field of control over vehicles, and more particularly, to a method, device and apparatus for controlling a windscreen wiper, and a vehicle.

### BACKGROUND

A windscreen wiper, also called as a rain brush, a rain wiper, wiper and the like, may be configured to wipe away rain, snow, dust and the like attached to a windscreen of a vehicle to improve visibility for a driver and improve driving safety.

A windscreen wiper is usually required to be close to a windscreen, and a blade of the windscreen wiper is closely attached to the windscreen to ensure a wiping effect. However, in some weather environments, the windscreen wiper is very likely to be frozen on the windscreen, which effects normal use and even leads to scratch to the windscreen or damage to the windscreen wiper.

### SUMMARY

Accordingly, the present invention provides a method, device and apparatus for controlling a windscreen wiper, and a vehicle.

According to a first aspect, the invention relates to a method for controlling a windscreen wiper, comprising: acquiring information about an environment where a vehicle is located, the information about the environment where the vehicle is located comprising: information about an environmental temperature; determining whether the vehicle is in a service state or an out-of-service state; determining whether the environmental temperature is less than or equal to a preset temperature value according to the information about the environmental temperature; and when the vehicle is in the out-of-service state and the environmental temperature is less than or equal to the preset temperature value, controlling the windscreen wiper of the vehicle to be raised in a direction away from a windscreen of the vehicle.

According to the first aspect, the information about the environment where the vehicle is located is acquired, the information about the environment where the vehicle is located including the information about the environmental temperature, whether the vehicle is in the service state or the out-of-service state is determined, whether the environmental temperature is less than or equal to the preset temperature value is determined according to the information about the environmental temperature, and when the vehicle is in the out-of-service state and the environmental temperature is less than or equal to the preset temperature value, the windscreen wiper of the vehicle is controlled to be raised in the direction away from the windscreen of the vehicle. In the method provided by the embodiments of the present disclosure, under the condition that the environmental temperature is less than or equal to the preset temperature value, the windscreen wiper may be raised in the direction away from the windscreen, such that the windscreen wiper gets far away from the windscreen, the scratch to the windscreen and/or the damage to the windscreen wiper due to freezing of the windscreen wiper on the windscreen are/is effectively avoided, the service life of the windscreen wiper is prolonged, and normal use of the windscreen wiper is ensured, so that the driving safety of the vehicle is ensured.

According to an exemplary embodiment, the information about the environment where the vehicle is located further comprises: information about an environmental humidity; and wherein before controlling the windscreen wiper of the vehicle to be raised in the direction away from the windscreen of the vehicle when the vehicle is in the out-of-service state and the environmental temperature is less than or equal to the preset temperature value, the method further comprises: determining whether the environmental humidity is more than or equal to a preset humidity value according to the information about the environmental humidity; and correspondingly, controlling the windscreen wiper of the vehicle to be raised in the direction away from the windscreen of the vehicle when the vehicle is in the out-of-service state and the environmental temperature is less than or equal to the preset temperature value comprises: when the vehicle is in the out-of-service state, the environmental temperature is less than or equal to the preset temperature value and the environmental humidity is more than or equal to the preset humidity value, controlling the windscreen wiper to be raised in the direction away from the windscreen.

According to a particular embodiment, the information about the environment where the vehicle is located further comprises: weather information; and wherein before controlling the windscreen wiper of the vehicle to be raised in the direction away from the windscreen of the vehicle when the vehicle is in the out-of-service state and the environmental temperature is less than or equal to the preset temperature value, the method further comprises: determining whether rainy or snowy weather exists in a time period corresponding to the weather information according to the weather information; and correspondingly, controlling the windscreen wiper of the vehicle to be raised in the direction away from the windscreen of the vehicle when the vehicle is in the out-of-service state and the environmental temperature is less than or equal to the preset temperature value comprises: when the vehicle is in the out-of-service state, the environmental temperature is less than or equal to the preset temperature value and the rainy or snowy weather exists in the time period corresponding to the weather information, controlling the windscreen wiper to be raised in the direction away from the windscreen.

According to a particular embodiment, the information about the environment where the vehicle is located further comprises: the information about the environmental humidity and the weather information; and wherein before controlling the windscreen wiper of the vehicle to be raised in the direction away from the windscreen of the vehicle when the vehicle is in the out-of-service state and the environmental temperature is less than or equal to the preset temperature value, the method further comprises: determining whether the environmental humidity is more than or equal to the preset humidity value according to the information about the environmental humidity, and determining whether the rainy or snowy weather exists in the time period corresponding to the weather information according to the weather information; and correspondingly, controlling the windscreen wiper of the vehicle to be raised in the direction away from the windscreen of the vehicle when the vehicle is in the out-of-service state and the environmental temperature is less than or equal to the preset temperature value comprises: when the vehicle is in the out-of-service state, the environmental temperature is less than or equal to the preset temperature value, the environmental humidity is more than or equal to the preset humidity value and the rainy or snowy weather exists in the time period corresponding to the weather information, controlling the windscreen wiper to be raised in the direction away from the windscreen.

According to a particular embodiment, acquiring the information about the environment where the vehicle is located comprises: acquiring the information, acquired by a sensor of the vehicle, about the environment where the vehicle is located; or acquiring the information, sent by terminal equipment, about the environment where the vehicle is located.

According to a particular embodiment, determining whether the vehicle is in the service state or the out-of-service state comprises: acquiring a travelling speed of the vehicle, and/or a state of an engine of the vehicle; when the travelling speed of the vehicle is less than or equal to a preset speed, and/or the engine of the vehicle is in a non-started state, determining that the vehicle is in the out-of-service state; and if the travelling speed of the vehicle is greater than the preset speed, and/or the engine of the vehicle is in a started state, determining that the vehicle is in the service state.

According to a particular embodiment, the method further comprises: receiving an input starting signal for the engine of the vehicle; and controlling the windscreen wiper to descend in a direction close to the windscreen according to the starting signal.

According to a second aspect, the invention relates to a device for controlling a windscreen wiper, comprising: a first acquisition module, configured to acquire information about an environment where a vehicle is located, the information about the environment where the vehicle is located comprising: information about an environmental temperature; a first determination module, configured to determine whether the vehicle is in a service state or an out-of-service state; a second determination module, configured to determine whether the environmental temperature is less than or equal to a preset temperature value according to the information about the environmental temperature; and a control module, configured to, when the vehicle is in the out-of-service state and the environmental temperature is less than or equal to the preset temperature value, control the windscreen wiper of the vehicle to be raised in a direction away from a windscreen of the vehicle.

According to the second aspect, the information about the environment where the vehicle is located is acquired, the information about the environment where the vehicle is located including the information about the environmental temperature, whether the vehicle is in the service state or the out-of-service state is determined, whether the environmental temperature is less than or equal to the preset temperature value is determined according to the information about the environmental temperature, and when the vehicle is in the out-of-service state and the environmental temperature is less than or equal to the preset temperature value, the windscreen wiper of the vehicle is controlled to be raised in the direction away from the windscreen of the vehicle. In the method provided by the embodiments of the present disclosure, under the condition that the environmental temperature is less than or equal to the preset temperature value, the windscreen wiper may be raised in the direction away from the windscreen, such that the windscreen wiper gets far away from the windscreen, the scratch to the windscreen and/or the damage to the windscreen wiper due to freezing of the windscreen wiper on the windscreen are/is effectively avoided, the service life of the windscreen wiper is prolonged, and normal use of the windscreen wiper is ensured, so that the driving safety of the vehicle is ensured.

According to a particular embodiment, the information about the environment where the vehicle is located further comprises information about an environmental humidity; and the device for controlling a windscreen wiper further comprises: a third determination module, configured to determine whether the environmental humidity is more than or equal to a preset humidity value according to the information about the environmental humidity; and the control module is further configured to, when the vehicle is in the out-of-service state, the environmental temperature is less than or equal to the preset temperature value and the environmental humidity is more than or equal to the preset humidity value, control the windscreen wiper to be raised in the direction away from the windscreen.

According to a particular embodiment, the information about the environment where the vehicle is located further comprises: weather information; and the device for controlling a windscreen wiper further comprises: a fourth determination module, configured to determine whether rainy or snowy weather exists in a time period corresponding to the weather information according to the weather information; and the control module is further configured to, when the vehicle is in the out-of-service state, the environmental temperature is less than or equal to the preset temperature value and the rainy or snowy weather exists in the time period corresponding to the weather information, control the windscreen wiper to be raised in the direction away from the windscreen; or the information about the environment where the vehicle is located further comprises: the information about the environmental humidity and the weather information; and the device for controlling a windscreen wiper further comprises: a fifth determination module, configured to determine whether the environmental humidity is more than or equal to the preset humidity value according to the information about the environmental humidity, and a sixth determination module, configured to determine whether the rainy or snowy weather exists in the time period corresponding to the weather information according to the weather information; and the control module is further configured to, when the vehicle is in the out-of-service state, the environmental temperature is less than or equal to the preset temperature value, the environmental humidity is more than or equal to the preset humidity value and the rainy or snowy weather exists in the time period corresponding to the weather information, control the windscreen wiper to be raised in the direction away from the windscreen.

According to a particular embodiment, the first acquisition module is further configured to acquire the information, acquired by a sensor of the vehicle, about the environment where the vehicle is located, or acquire the information, sent by terminal equipment, about the environment where the vehicle is located.

According to a particular embodiment, the device further comprises: a second acquisition module, configured to acquire a travelling speed of the vehicle, and/or a state of an engine of the vehicle, wherein the first determination module is further configured to, when the travelling speed of the vehicle is less than or equal to a preset speed, and/or the engine of the vehicle is in a non-started state, determine that the vehicle is in the out-of-service state, and when the travelling speed of the vehicle is greater than the preset speed, and/or the engine of the vehicle is in a started state, determine that the vehicle is in the service state.

According to a particular embodiment, the device further comprises: an input module, configured to receive an input starting signal for the engine of the vehicle, wherein the control module is further configured to control the windscreen wiper to descend in a direction close to the windscreen according to the starting signal.

According to a third aspect, the invention relates to an apparatus for controlling a windscreen wiper, comprising: a processor; and a memory configured to store instructions executable for the processor, wherein the processor is configured to: acquire information about an environment where a vehicle is located, the information about the environment where the vehicle is located comprising: information about an environmental temperature; determine whether the vehicle is in a service state or an out-of-service state; determine whether the environmental temperature is less than or equal to a preset temperature value according to the information about the environmental temperature; and when the vehicle is in the out-of-service state and the environmental temperature is less than or equal to the preset temperature value, control the windscreen wiper of the vehicle to be raised in a direction away from a windscreen of the vehicle.

According to the third aspect, the information about the environment where the vehicle is located is acquired, the information about the environment where the vehicle is located including the information about the environmental temperature, whether the vehicle is in the service state or the out-of-service state is determined, whether the environmental temperature is less than or equal to the preset temperature value is determined according to the information about the environmental temperature, and when the vehicle is in the out-of-service state and the environmental temperature is less than or equal to the preset temperature value, the windscreen wiper of the vehicle is controlled to be raised in the direction away from the windscreen of the vehicle. In the method provided by the embodiments of the present disclosure, under the condition that the environmental temperature is less than or equal to the preset temperature value, the windscreen wiper may be raised in the direction away from the windscreen, such that the windscreen wiper gets far away from the windscreen, the scratch to the windscreen and/or the damage to the windscreen wiper due to freezing of the windscreen wiper on the windscreen are/is effectively avoided, the service life of the windscreen wiper is prolonged, and normal use of the windscreen wiper is ensured, so that the driving safety of the vehicle is ensured.

According to a fourth aspect, the invention relates to a vehicle, comprising: a windscreen wiper and the apparatus for controlling a windscreen wiper according to the third aspect, the windscreen wiper being connected with the apparatus.

According to the fourth aspect, the information about the environment where the vehicle is located is acquired, the information about the environment where the vehicle is located including the information about the environmental temperature, whether the vehicle is in the service state or the out-of-service state is determined, whether the environmental temperature is less than or equal to the preset temperature value is determined according to the information about the environmental temperature, and when the vehicle is in the out-of-service state and the environmental temperature is less than or equal to the preset temperature value, the windscreen wiper of the vehicle is controlled to be raised in the direction away from the windscreen of the vehicle. In the method provided by the embodiments of the present disclosure, under the condition that the environmental temperature is less than or equal to the preset temperature value, the windscreen wiper may be raised in the direction away from the windscreen, such that the windscreen wiper gets far away from the windscreen, the scratch to the windscreen and/or the damage to the windscreen wiper due to freezing of the windscreen wiper on the windscreen are/is effectively avoided, the service life of the windscreen wiper is prolonged, and normal use of the windscreen wiper is ensured, so that the driving safety of the vehicle is ensured.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments according to the present disclosure and, together with the description, serve to explain the principles of the present disclosure.
Fig. 1 is a first flow chart illustrating a method for controlling a windscreen wiper, according to an exemplary embodiment.
Fig. 2 is a second flow chart illustrating a method for controlling a windscreen wiper, according to an exemplary embodiment.
Fig. 3 is a third flow chart illustrating a method for controlling a windscreen wiper, according to an exemplary embodiment.
Fig. 4 is a fourth flow chart illustrating a method for controlling a windscreen wiper, according to an exemplary embodiment.
Fig. 5 is a fifth flow chart illustrating a method for controlling a windscreen wiper, according to an exemplary embodiment.
Fig. 6 is a sixth flow chart illustrating a method for controlling a windscreen wiper, according to an exemplary embodiment.
Fig. 7 is a first block diagram of a device for controlling a windscreen wiper, according to an exemplary embodiment.
Fig. 8 is a second block diagram of a device for controlling a windscreen wiper, according to an exemplary embodiment.
Fig. 9 is a third block diagram of a device for controlling a windscreen wiper, according to an exemplary embodiment.
Fig. 10 is a fourth block diagram of a device for controlling a windscreen wiper, according to an exemplary embodiment.
Fig. 11 is a fifth block diagram of a device for controlling a windscreen wiper, according to an exemplary embodiment.
Fig. 12 is a sixth block diagram of a device for controlling a windscreen wiper, according to an exemplary embodiment.
Fig. 13 is a block diagram of equipment for controlling a windscreen wiper, according to an exemplary embodiment.

### DETAILED DESCRIPTION

Exemplary embodiments will be described in detail. Examples of the exemplary embodiments are illustrated in the accompanying drawings. The following description refers to the accompanying drawings in which the same reference in different drawings represents the same or similar elements unless otherwise specified. The implementations set forth in the following description of exemplary embodiments do not represent all implementations consistent with the present disclosure. Instead, the implementations are merely examples of apparatuses and methods which are recited in the appended claims and consistent with some aspects of the present disclosure.

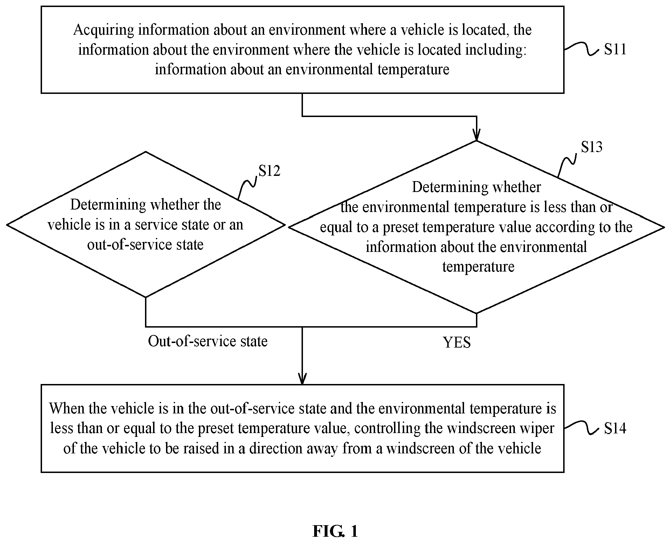

Fig. 1 is a first flow chart illustrating a method for controlling a windscreen wiper, according to an exemplary embodiment. The method for controlling a windscreen wiper may be applied to a device for controlling a windscreen wiper, and the device for controlling a windscreen wiper may be a controller arranged in a vehicle. The vehicle may be any vehicle selected from a group consisting of a motorcycle, an electric motorcycle, an electric automobile, an electric moped, an electric self-balancing scooter, a hybrid vehicle and an automobile. A windscreen wiper may be a windscreen wiper for a front windscreen of the vehicle, or a windscreen wiper for a rear windscreen of the vehicle.

As illustrated in Fig. 1, the method for controlling a windscreen wiper may include the following steps.

In Step S11, information about an environment where the vehicle is located is acquired. The information about the environment where the vehicle is located includes information about an environmental temperature.

The information about the environment where the vehicle is located may include, for example, environmental information corresponding to at least one of a current moment, a future moment at preset time interval from the current moment, a time period where the current moment is located, a time period where the future moment is located, and the like. Here, centigrade degree, for example, may be a measure of the information about the environmental temperature.

In Step S11, the information about the environment where the vehicle is located may be acquired through a device within the vehicle, or another device outside the vehicle. The device may acquire the environmental information using one or more sensors on the vehicle. Alternatively or additionally, the device may acquire the environmental information from an online database based on the vehicle location.

Optionally, acquiring the information about the environment where the vehicle is located in Step S11 may include: acquiring the information, acquired by a sensor of the vehicle, about the environment where the vehicle is located; or acquiring the information, sent by terminal equipment, about the environment where the vehicle is located.

Here, the sensor may be a sensor corresponding to an environmental parameter in the information, set by the vehicle, about the environment where the vehicle is located. After acquiring the information about the environment where the vehicle is located, the sensor may send the information about the environment where the vehicle is located to a device for controlling a windscreen wiper through a wireless or wired connection.

The terminal equipment may be terminal equipment of a passenger of the vehicle. The device for controlling a windscreen wiper may receive the environmental information sent by a mobile terminal in any communication manner of Near Field Communication (NFC), Wireless-Fidelity (WiFi) communication, BlueTooth (BT) communication, a data line and the like.

For example, when the information about the environment where the vehicle is located includes information about an environmental temperature, the sensor may include a temperature sensor. The temperature sensor may acquire the information about the environmental temperature. The terminal equipment may directly acquire the information about the environmental temperature, or acquire the information about the environmental temperature and the like from a preset server.

In Step S12, whether the vehicle is in a service state or an out-of-service state is determined.

In Step S12, whether the vehicle is in the service state or the out-of-service state may be determined according to information such as a travelling speed of the vehicle and/or a state of an engine of the vehicle.

In Step S13, whether the environmental temperature is less than or equal to a preset temperature value is determined according to the information about the environmental temperature.

In Step S13, the environmental temperature may be determined according to the information about the environmental temperature, and is compared with a magnitude of the preset temperature value to determine whether the environmental temperature is less than or equal to the preset temperature value. The preset temperature value may be, for example, 0°C or 1°C. Of course, the preset temperature may be another temperature value, which will not be elaborated herein.

It is to be noted that Step S12 and Step S13 may be executed simultaneously or sequentially, which will not be limited in the present disclosure.

In Step S14, when the vehicle is in the out-of-service state and the environmental temperature is less than or equal to the preset temperature value, the windscreen wiper of the vehicle is controlled to be raised in a direction away from a windscreen of the vehicle.

When the vehicle is in the out-of-service state, it may be determined that the windscreen wiper is not required to be used. When the environmental temperature is less than or equal to the preset temperature value, it may be determined that a probability that the windscreen wiper is frozen on the windscreen within a preset time period from the current moment is relatively high. Therefore, in Step S13, under the condition that the vehicle is in the out-of-service state and the environmental temperature is less than or equal to the preset temperature value, the windscreen wiper may be controlled to be raised to get away from the windscreen such that the windscreen wiper can be prevented from being frozen on the windscreen.

When the vehicle is in the service state, it may be determined that the windscreen wiper may be used for wiping away a foreign matter such as rain, snow and/or dust on the windscreen. When the environmental temperature is more than the preset temperature value, it may be determined that the probability that the windscreen wiper is frozen on the windscreen within the preset time period from the current moment is relatively low. Therefore, the method may further include: when the vehicle is in the service state and/or the environmental temperature is more than the preset temperature value, controlling the windscreen wiper not to be raised, for example, keeping a distance between the windscreen wiper and the windscreen within a preset range such that the blade and the like of the windscreen wiper to closely contact with the windscreen.

According to the method for controlling a windscreen wiper provided by the embodiment of the present disclosure, the information about the environment where the vehicle is located is acquired. The information about the environment where the vehicle is located includes the information about the environmental temperature. Whether the vehicle is in the service state or the out-of-service state is determined, and whether the environmental temperature is less than or equal to the preset temperature value is determined according to the information about the environmental temperature. When the vehicle is in the out-of-service state and the environmental temperature is less than or equal to the preset temperature value, the windscreen wiper of the vehicle is controlled to be raised in the direction away from the windscreen of the vehicle. In the method provided by the embodiments of the present disclosure, under the condition that the environmental temperature is less than or equal to the preset temperature value, the windscreen wiper may be raised in the direction away from the windscreen. As such, the windscreen wiper gets far away from the windscreen, scratch to the windscreen and/or damage to the windscreen wiper due to freezing of the windscreen wiper on the windscreen are/is effectively avoided, service life of the windscreen wiper is prolonged, and normal use of the windscreen wiper is ensured, so that driving safety of the vehicle is ensured.

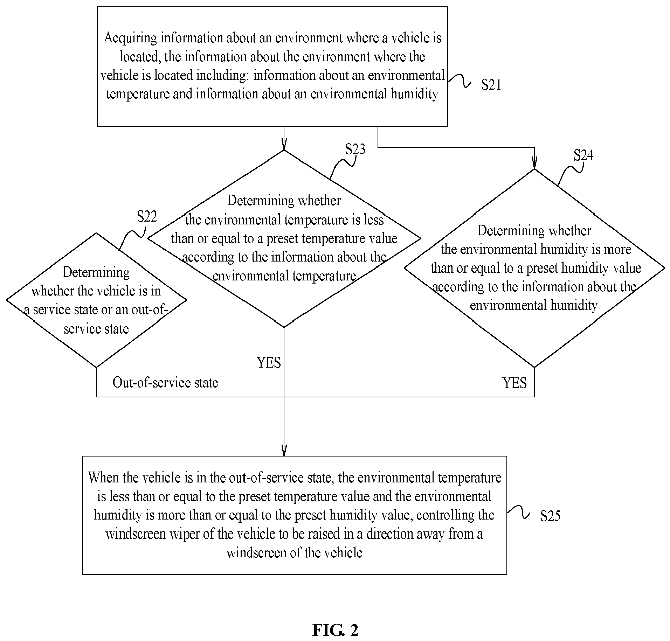

Fig. 2 is a second flow chart illustrating a method for controlling a windscreen wiper, according to an exemplary embodiment. The method for controlling a windscreen wiper may be applied to a device for controlling a windscreen wiper. The device for controlling a windscreen wiper may be a controller arranged in a vehicle. The vehicle may be any vehicle selected from a group consisting of a motorcycle, an electric motorcycle, an electric automobile, an electric moped, an electric self-balancing scooter, a hybrid vehicle and an automobile. A windscreen wiper may be a windscreen wiper for a front windscreen of the vehicle, or a windscreen wiper for a rear windscreen of the vehicle.

As illustrated in Fig. 2, the method for controlling a windscreen wiper may include the following steps.

In Step S21, information about an environment where the vehicle is located is acquired. The information about the environment where the vehicle is located includes information about an environmental temperature and information about an environmental humidity.

Here, the information about the environmental humidity may be represented by a percentage.

Optionally, acquiring the information about the environment where the vehicle is located in Step S21 may include: acquiring the information, acquired by a sensor of the vehicle, about the environment where the vehicle is located; or acquiring the information, sent by terminal equipment, about the environment where the vehicle is located.

For example, when the information about the environment where the vehicle is located may further include the information about the environmental humidity. The sensor may further include a humidity sensor. The humidity sensor may acquire the information about the environmental humidity. The terminal equipment may directly acquire the information about the environmental humidity, or may acquire the information about the environmental humidity and the like from a preset server.

In Step S22, whether the vehicle is in a service state or an out-of-service state is determined.

Step S22 is the same as Step S12, and will not be elaborated herein.

In Step S23, whether the environmental temperature is less than or equal to a preset temperature value is determined according to the information about the environmental temperature.

Step S23 is the same as Step S13, and will not be elaborated herein.

In Step S24, whether the environmental humidity is more than or equal to a preset humidity value is determined according to the information about the environmental humidity.

In Step S24, the environmental humidity may be determined according to the information about the environmental humidity, and magnitudes of the environmental humidity and the preset humidity value are compared to determine whether the environmental humidity is less than or equal to the preset humidity value.

It is to be noted that Step S22, Step S23 and Step S24 may be executed simultaneously or sequentially, which will not be limited in the present disclosure.

In Step S25, when the vehicle is in the out-of-service state, the environmental temperature is less than or equal to the preset temperature value and the environmental humidity is more than or equal to the preset humidity value, the windscreen wiper is controlled to be raised in a direction away from a windscreen.

When the environmental temperature is less than or equal to the preset temperature value and the environmental humidity is more than or equal to the preset humidity value, it may be determined that a probability that the windscreen wiper is frozen on the windscreen within a preset time period from a current moment is relatively high. Therefore, in Step S25, under the condition that the vehicle is in the out-of-service state, the environmental temperature is less than or equal to the preset temperature value and the environmental humidity is more than or equal to the preset humidity value, the windscreen wiper may be controlled to be raised to get away from the windscreen. As such, the windscreen wiper may be effectively prevented from being frozen on the windscreen.

Optionally, when the vehicle is in the service state, the environmental temperature is less than or equal to the preset temperature value and the environmental humidity is less than the preset humidity value, the windscreen wiper may be controlled to be raised in the direction away from the windscreen, and a distance between the windscreen wiper and the windscreen may be controlled to be less than or equal to a preset distance such that the blade and the like of the windscreen wiper can closely contact with the windscreen.

According to the method for controlling a windscreen wiper provided by the embodiment of the present disclosure, whether the environmental humidity is more than or equal to the preset humidity value may also be determined, and when the vehicle is in the out-of-service state, the environmental temperature is less than or equal to the preset temperature value and the environmental humidity is more than or equal to the preset humidity value, the windscreen wiper is controlled to be raised in the direction away from the windscreen. As such, the windscreen wiper may be controlled more accurately, and normal use of the windscreen wiper may also be ensured under the condition of avoiding the windscreen wiper being frozen on the windscreen.

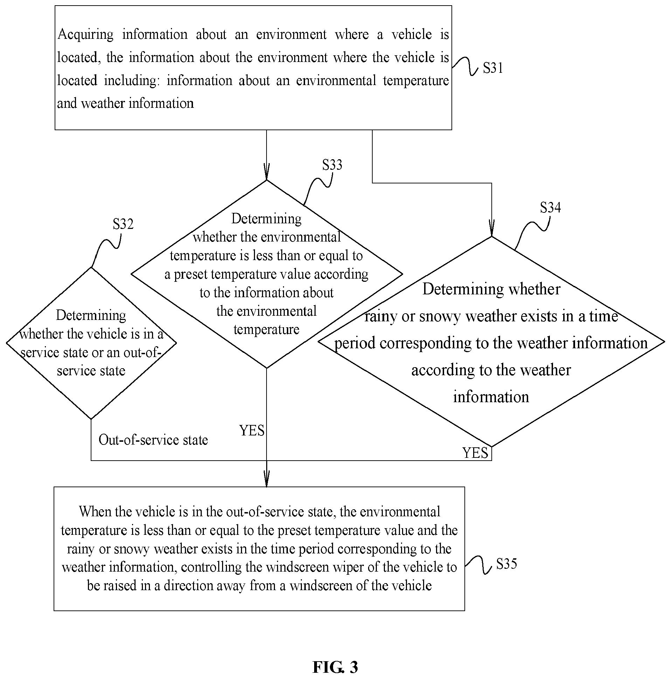

Fig. 3 is a third flow chart illustrating a method for controlling a windscreen wiper, according to an exemplary embodiment. The method for controlling a windscreen wiper may be applied to a device for controlling a windscreen wiper. The device for controlling a windscreen wiper may be a controller arranged in a vehicle. The vehicle may be any vehicle selected from a group consisting of a motorcycle, an electric motorcycle, an electric automobile, an electric moped, an electric self-balancing scooter, a hybrid vehicle and an automobile. A windscreen wiper may be a windscreen wiper for a front windscreen of the vehicle, or a windscreen wiper for a rear windscreen of the vehicle.

As illustrated in Fig. 3, the method for controlling a windscreen wiper may include the following steps.

In Step S31, information about an environment where the vehicle is located is acquired. The information about the environment where the vehicle is located includes information about an environmental temperature and weather information.

Here, the weather information may be current weather information, and/or weather forecast information. Here, the current weather information may include weather information at a current moment, and/or weather information in a time period where the current moment is located. For example, when the current moment is 11 A.M., the weather information may include weather information at 11 A.M., and/or weather information on that day. The weather forecast information may include, for example, weather information on at least one future day relative to that day, for example, weather information of the next week.

Optionally, acquiring the information about the environment where the vehicle is located in Step S31 may include: acquiring the information, acquired by a sensor of the vehicle, about the environment where the vehicle is located; or acquiring the information, sent by terminal equipment, about the environment where the vehicle is located.

For example, when the information about the environment where the vehicle is located further includes the weather information, the sensor may further include a meteorological sensor. The meteorological sensor may acquire the weather information. The terminal equipment may directly acquire the weather information, or may acquire the weather information and the like from a preset server such as an application server with a weather application.

In Step S32, whether the vehicle is in a service state or an out-of-service state is determined.

Step S32 is the same as Step S12, and will not be elaborated herein.

In Step S33, whether the environmental temperature is less than or equal to a preset temperature value is determined according to the information about the environmental temperature.

Step S33 is the same as Step S13, and will not be elaborated herein.

In Step S34, whether rainy or snowy weather exists in a time period corresponding to the weather information is determined according to the weather information.

In Step S34, whether the weather information includes information corresponding to the rainy or snowy weather may be determined. When the weather information includes the information corresponding to the rainy or snowy weather, it may be determined that the rainy or snowy weather exists in the time period corresponding to the weather information; and on the contrary. When the weather information does not include the information corresponding to the rainy or snowy weather, it may be determined that the rainy or snowy weather does not exist in the time period corresponding to the weather information.

It is to be noted that Step S32, Step S33 and Step S34 may be executed simultaneously or sequentially, which will not be limited in the present disclosure.

In Step S35, when the vehicle is in the out-of-service state, the environmental temperature is less than or equal to the preset temperature value and the rainy or snowy weather exists in the time period corresponding to the weather information, the windscreen wiper is controlled to be raised in a direction away from a windscreen.

When the environmental temperature is less than or equal to the preset temperature value and the rainy or snowy weather exists in the time period corresponding to the weather information, it may be determined that a probability that the windscreen wiper is frozen on the windscreen within a preset time period from the current moment is relatively high. Therefore, in Step S35, under the condition that the vehicle is in the out-of-service state, the environmental temperature is less than or equal to the preset temperature value and the rainy or snowy weather exists in the time period corresponding to the weather information, the windscreen wiper may be controlled to be raised to get away from the windscreen. As such, the windscreen wiper may be effectively prevented from being frozen on the windscreen in the rainy or snowy weather.

Optionally, when the vehicle is in the out of service state, the environmental temperature is less than or equal to the preset temperature value and the rainy or snowy weather does not exist in the time period corresponding to the weather information, the windscreen wiper may be controlled to be raised in the direction away from the windscreen, and a distance between the windscreen wiper and the windscreen may be controlled to be less than or equal to a preset distance such that the blade and the like of the windscreen wiper can closely contact with the windscreen.

According to the method for controlling a windscreen wiper provided by the embodiment of the present disclosure, whether an environmental humidity is more than or equal to a preset humidity value may also be determined, and when the vehicle is in the out-of-service state, the environmental temperature is less than or equal to the preset temperature value and the rainy or snowy weather exists in the time period corresponding to the weather information, the windscreen wiper is controlled to be raised in the direction away from the windscreen. As such, the windscreen wiper may be controlled more accurately, and normal use of the windscreen wiper may also be ensured under the condition of avoiding the windscreen wiper being frozen on the windscreen in the rainy or snowy weather.

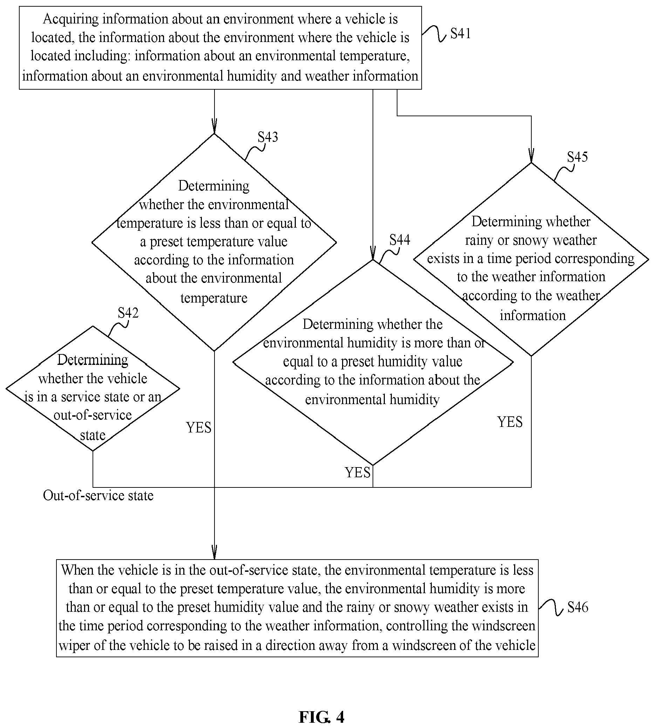

Fig. 4 is a fourth flow chart illustrating a method for controlling a windscreen wiper, according to an exemplary embodiment. The method for controlling a windscreen wiper may be applied to a device for controlling a windscreen wiper. The device for controlling a windscreen wiper may be a controller arranged in a vehicle. The vehicle may be any vehicle selected from a group consisting of a motorcycle, an electric motorcycle, an electric automobile, an electric moped, an electric self-balancing scooter, a hybrid vehicle and an automobile. A windscreen wiper may be a windscreen wiper for a front windscreen of the vehicle, or a windscreen wiper for a rear windscreen of the vehicle.

As illustrated in Fig. 4, the method for controlling a windscreen wiper may include the following steps.

In Step S41, information about an environment where the vehicle is located is acquired. The information about the environment where the vehicle is located includes information about an environmental temperature, information about an environmental humidity and weather information.

Optionally, acquiring the information about the environment where the vehicle is located in Step S41 may include: acquiring the information, acquired by a sensor of the vehicle, about the environment where the vehicle is located; or acquiring the information, sent by terminal equipment, about the environment where the vehicle is located.

In Step S42, whether the vehicle is in a service state or an out-of-service state is determined.

Step S42 is the same as Step S12, and will not be elaborated herein.

In Step S43, whether the environmental temperature is less than or equal to a preset temperature value is determined according to the information about the environmental temperature.

Step S43 is the same as Step S13, and will not be elaborated herein.

In Step S44, whether the environmental humidity is more than or equal to a preset humidity value is determined according to the information about the environmental humidity.

Step S44 is the same as Step S24, and will not be elaborated herein.

In Step S45, whether rainy or snowy weather exists in a time period corresponding to the weather information is determined according to the weather information.

Step S45 is the same as Step S34, and will not be elaborated herein.

It is to be noted that Step S42, Step S43, Step S44 and Step S45 may be executed simultaneously or sequentially, which will not be limited in the present disclosure.

In Step S46, when the vehicle is in the out-of-service state, the environmental temperature is less than or equal to the preset temperature value, the environmental humidity is more than or equal to the preset humidity value and the rainy or snowy weather exists in the time period corresponding to the weather information, the windscreen wiper may be controlled to be raised in a direction away from a windscreen.

When the environmental temperature is less than or equal to the preset temperature value, the environmental humidity is more than or equal to the preset humidity value and the rainy or snowy weather exists in the time period corresponding to the weather information, it may be determined that a probability that the windscreen wiper is frozen on the windscreen within a preset time period from the current moment is relatively high. Therefore, in Step S46, under the condition that the vehicle is in the out-of-service state, the environmental temperature is less than or equal to the preset temperature value, the environmental humidity is more than or equal to the preset humidity value and the rainy or snowy weather exists in the time period corresponding to the weather information, the windscreen wiper may be controlled to be raised to get away from the windscreen. As such, the windscreen wiper may be effectively prevented from being frozen on the windscreen in the rainy or snowy weather.

Optionally, when the vehicle is in the out-of-service state, the environmental temperature is less than or equal to the preset temperature value, the environmental humidity is more than or equal to the preset humidity value and/or the rainy or snowy weather does not exist in the time period corresponding to the weather information, the windscreen wiper may be controlled to be raised in the direction away from the windscreen, and a distance between the windscreen wiper and the windscreen may also be controlled to be less than or equal to a preset distance such that the blade and the like of the windscreen wiper can closely contact with the windscreen.

According to the method for controlling a windscreen wiper provided by the embodiment of the present disclosure, when the vehicle is in the out-of-service state, the environmental temperature is less than or equal to the preset temperature value, the environmental humidity is less than or equal to the preset humidity value and the rainy or snowy weather exists in the time period corresponding to the weather information, the windscreen wiper may also be controlled to be raised in the direction away from the windscreen. As such, the windscreen wiper may be controlled more accurately, and normal use of the windscreen wiper may be ensured under the condition of avoiding the windscreen wiper being frozen on the windscreen in the rainy or snowy weather.

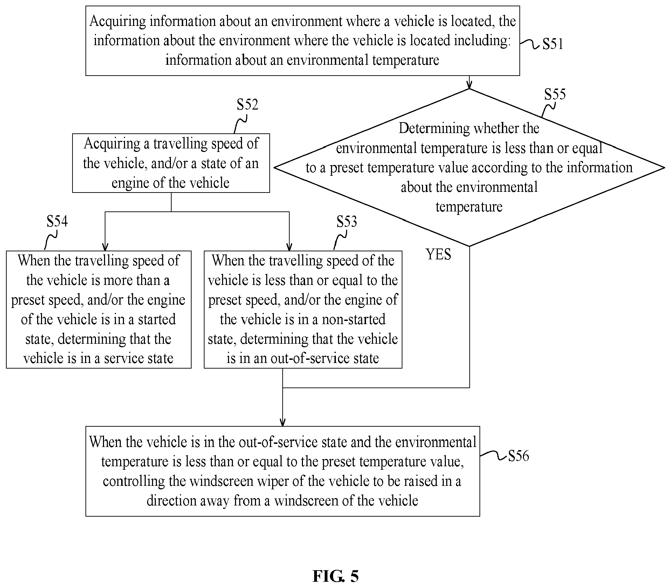

Fig. 5 is a fifth flow chart illustrating a method for controlling a windscreen wiper, according to an exemplary embodiment. The method for controlling a windscreen wiper may be applied to a device for controlling a windscreen wiper. The device for controlling a windscreen wiper may be a controller arranged in a vehicle. The vehicle may be any vehicle selected from a group consisting of a motorcycle, an electric motorcycle, an electric automobile, an electric moped, an electric self-balancing scooter, a hybrid vehicle and an automobile. A windscreen wiper may be a windscreen wiper for a front windscreen of the vehicle, or a windscreen wiper for a rear windscreen of the vehicle.

As illustrated in Fig. 5, the method for controlling a windscreen wiper may include the following steps.

In Step S51, information about an environment where the vehicle is located is acquired. The information about the environment where the vehicle is located includes information about an environmental temperature.

Step S51 is the same as Step S11, and will not be elaborated herein.

In Step S52, a travelling speed of the vehicle, and/or a state of an engine of the vehicle are/is acquired.

In Step S52, after the travelling speed of the vehicle is acquired, whether the travelling speed of the vehicle is less than or equal to a preset speed may be determined, and after the state of the engine of the vehicle is acquired, whether the engine of the vehicle is in a started state or a non-started state may be determined to the state of the engine.

Here, the non-started state may be a non-started state after flameout.

In Step S53, when the travelling speed of the vehicle is less than or equal to the preset speed, and/or the engine of the vehicle is in the non-started state, it is determined that the vehicle is in an out-of-service state.

In Step S54, when the travelling speed of the vehicle is greater than the preset speed, and/or the engine of the vehicle is in the started state, it is determined that the vehicle is in a service state.

In Step S55, whether the environmental temperature is less than or equal to a preset temperature value is determined according to the information about the environmental temperature.

Step S55 is the same as Step S13, and will not be elaborated herein.

It is to be noted that Step S53, Step S54 and Step S55 may be executed simultaneously or sequentially, which will not be limited in the present disclosure.

In Step S56, when the vehicle is in the out-of-service state and the environmental temperature is less than or equal to the preset temperature value, the windscreen wiper of the vehicle is controlled to be raised in a direction away from a windscreen of the vehicle.

Step S56 is the same as Step S14, and will not be elaborated herein.

According to the method for controlling a windscreen wiper provided by the embodiment of the present disclosure, the travelling speed of the vehicle and/or the state of the engine of the vehicle may be acquired, and whether the vehicle is in the service state or the out-of-service state may be determined. As such, a physical state of the vehicle may be judged more accurately, and the windscreen wiper may be controlled to be raised more accurately when the vehicle is in the out-of-service state and the environmental temperature is less than or equal to the preset temperature value. Thus, scratch to the windscreen and/or damage to the windscreen wiper due to freezing of the windscreen wiper on the windscreen may be effectively avoided, service life of the windscreen wiper is prolonged, and normal use of the windscreen wiper is ensured. Therefore, driving safety of the vehicle is ensured.

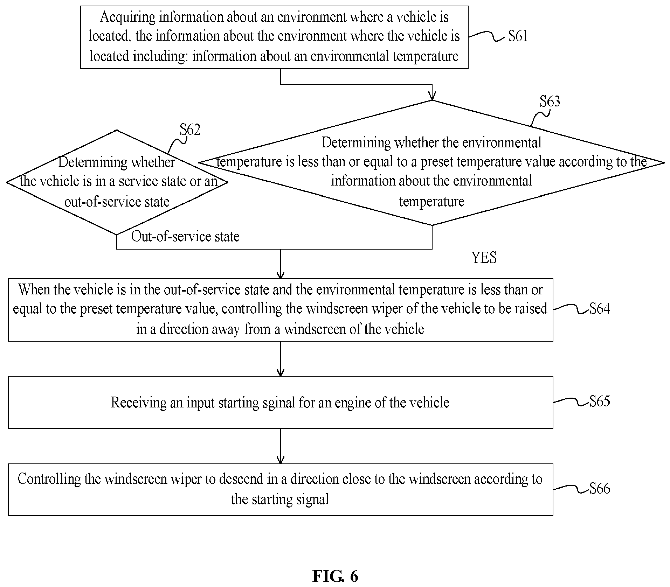

Fig. 6 is a sixth flow chart illustrating a method for controlling a windscreen wiper, according to an exemplary embodiment. The method for controlling a windscreen wiper may be applied to a device for controlling a windscreen wiper. The device for controlling a windscreen wiper may be a controller arranged in a vehicle. The vehicle may be any vehicle selected from a group consisting of a motorcycle, an electric motorcycle, an electric automobile, an electric moped, an electric self-balancing scooter, a hybrid vehicle and an automobile. A windscreen wiper may be a windscreen wiper for a front windscreen of the vehicle, or a windscreen wiper for a rear windscreen of the vehicle.

As illustrated in Fig. 6, the method for controlling a windscreen wiper may include the following steps.

In Step S61, information about an environment where the vehicle is located is acquired. The information about the environment where the vehicle is located includes information about an environmental temperature.

Step S61 is the same as Step S11, and will not be elaborated herein.

In Step S62, whether the vehicle is in a service state or an out-of-service state is determined.

Step S62 is the same as Step S12, and will not be elaborated herein.

In Step S63, whether the environmental temperature is less than or equal to a preset temperature value is determined according to the information about the environmental temperature.

Step S63 is the same as Step S13, and will not be elaborated herein.

It is to be noted that Step S62 and Step S63 may be executed simultaneously or sequentially, which will not be limited in the present disclosure.

In Step S64, when the vehicle is in the out-of-service state and the environmental temperature is less than or equal to the preset temperature value, the windscreen wiper of the vehicle is controlled to be raised in a direction away from a windscreen of the vehicle.

Step S64 is the same as Step S14, and will not be elaborated herein.

In Step S65, an input starting signal for an engine of the vehicle is received.

The starting signal for the engine may be a starting signal corresponding to an ignition operation performed by a user on the engine of the vehicle. The starting signal may be input through a starting key of the vehicle, or may be input through a starting button of the vehicle.

In Step S66, the windscreen wiper is controlled to descend in a direction close to the windscreen according to the starting signal.

In Step S66, the windscreen wiper may be controlled to descend in the direction close to the windscreen, so that a distance between the windscreen wiper and the windscreen may be kept within a preset range and thus the blade and the like of the windscreen wiper can closely contact with the windscreen.

According to the method for controlling a windscreen wiper provided by the embodiment of the present disclosure, the windscreen wiper may also be controlled to descend in the direction close to the windscreen under the condition of receiving the starting signal for the engine of the vehicle, such that the windscreen wiper gets close to the windscreen. Thus, the windscreen wiper may wipe away rain, snow, dust and/or the like on the windscreen, normal use of the windscreen wiper is ensured, and a passenger of the vehicle may clearly learn about environment and road condition and the like, so that driving safety of the vehicle is ensured.

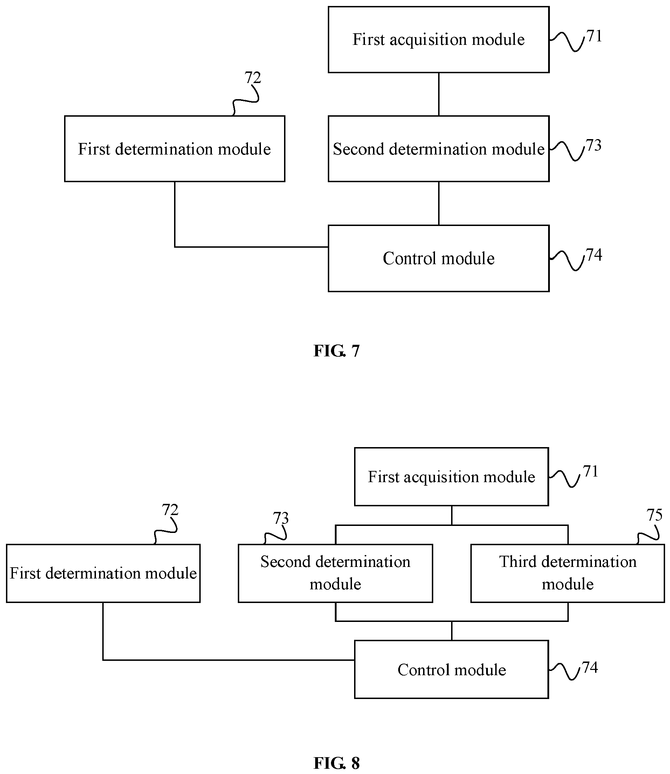

Fig. 7 is a first block diagram of a device for controlling a windscreen wiper, according to an exemplary embodiment. Referring to Fig. 7, the device for controlling a windscreen wiper may include a first acquisition module 71, a first determination module 72, a second determination module 73 and a control module 74.

The first acquisition module 71 is configured to acquire information about an environment where a vehicle is located, the information about the environment where the vehicle is located includes information about an environmental temperature.

Optionally, the first acquisition module 71 is further configured to acquire the information, acquired by a sensor of the vehicle, about the environment where the vehicle is located, or to acquire the information, sent by terminal equipment, about the environment where the vehicle is located.

The first determination module 72 is configured to determine whether the vehicle is in a service state or an out-of-service state.

The second determination module 73 is configured to determine whether the environmental temperature is less than or equal to a preset temperature value according to the information about the environmental temperature.

The control module 74 is configured to, when the vehicle is in the out-of-service state and the environmental temperature is less than or equal to the preset temperature value, control the windscreen wiper of the vehicle to be raised in a direction away from a windscreen of the vehicle.

According to the device for controlling a windscreen wiper provided by the embodiment of the present disclosure, under the condition that the environmental temperature is less than or equal to the preset temperature value, the windscreen wiper may be raised in the direction away from the windscreen, such that the windscreen wiper gets far away from the windscreen. As such, scratch to the windscreen and/or damage to the windscreen wiper due to freezing of the windscreen wiper on the windscreen are/is effectively avoided, service life of the windscreen wiper is prolonged, and normal use of the windscreen wiper is ensured, so that driving safety of the vehicle is ensured.

Fig. 8 is a second block diagram of a device for controlling a windscreen wiper, according to an exemplary embodiment. Optionally, the information about the environment where the vehicle is located may further include information about an environmental humidity.

Referring to Fig. 8, the device for controlling a windscreen wiper may further include a third determination module 75. The third determination module 75 may be configured to determine whether the environmental humidity is more than or equal to a preset humidity value according to the information about the environmental humidity.

The control module 74 may be further configured to, when the vehicle is in the out-of-service state, the environmental temperature is less than or equal to the preset temperature value and the environmental humidity is more than or equal to the preset humidity value, control the windscreen wiper to be raised in a direction away from a windscreen.

According to the device for controlling a windscreen wiper provided by the embodiment of the present disclosure, the windscreen wiper may be controlled more accurately, and normal use of the windscreen wiper may be ensured under the condition of avoiding the windscreen wiper being frozen on the windscreen.

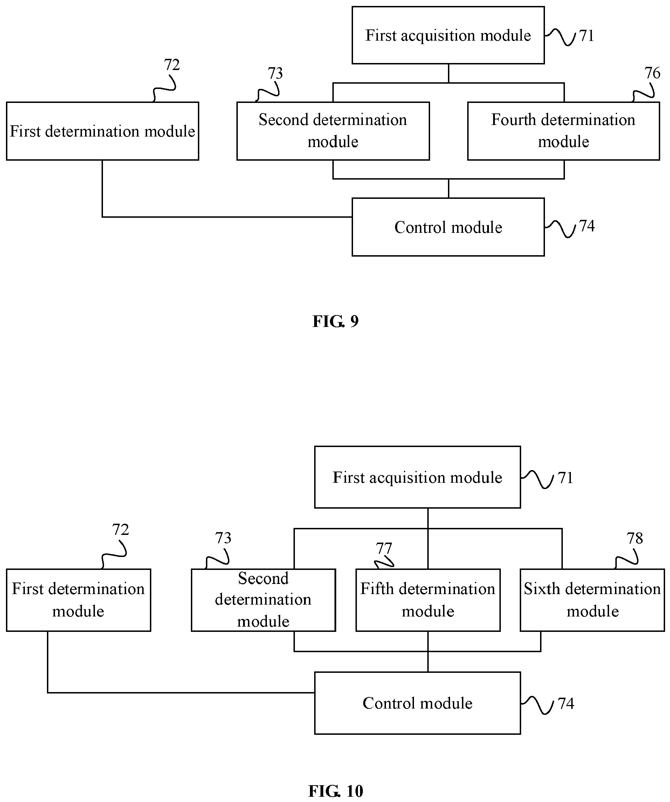

Fig. 9 is a third block diagram of a device for controlling a windscreen wiper, according to an exemplary embodiment. Optionally, the information about the environment where the vehicle is located may further include weather information.

Referring to Fig. 9, the device for controlling a windscreen wiper may further include a fourth determination module 76. The fourth determination module 76 may be configured to determine whether rainy or snowy weather exists in a time period corresponding to the weather information according to the weather information.

The control module 74 may be further configured to, when the vehicle is in the out-of-service state, the environmental temperature is less than or equal to the preset temperature value and the rainy or snowy weather exists in the time period corresponding to the weather information, control the windscreen wiper to be raised in the direction away from the windscreen.

According to the device for controlling a windscreen wiper provided by the embodiment of the present disclosure, the windscreen wiper may be controlled more accurately, and normal use of the windscreen wiper may be ensured under the condition of avoiding the windscreen wiper being frozen on the windscreen.

Fig. 10 is a fourth block diagram of a device for controlling a windscreen wiper, according to an exemplary embodiment. Optionally, the information about the environment where the vehicle is located may further include the information about the environmental humidity and the weather information.

Referring to Fig. 10, the device for controlling a windscreen wiper may further include a fifth determination module 77 and a sixth determination module 78.

The fifth determination module 77 may be configured to determine whether the environmental humidity is more than or equal to the preset humidity value according to the information about the environmental humidity.

The sixth determination module 78 may be configured to determine whether the rainy or snowy weather exists in the time period corresponding to the weather information according to the weather information.

The control module 74 may be further configured to, when the vehicle is in the out-of-service state, the environmental temperature is less than or equal to the preset temperature value, the environmental humidity is more than or equal to the preset humidity value and the rainy or snowy weather exists in the time period corresponding to the weather information, control the windscreen wiper to be raised in the direction away from the windscreen.

According to the device for controlling a windscreen wiper provided by the embodiment of the present disclosure, the windscreen wiper may be controlled more accurately, and normal use of the windscreen wiper may be ensured under the condition of avoiding the windscreen wiper being frozen on the windscreen.

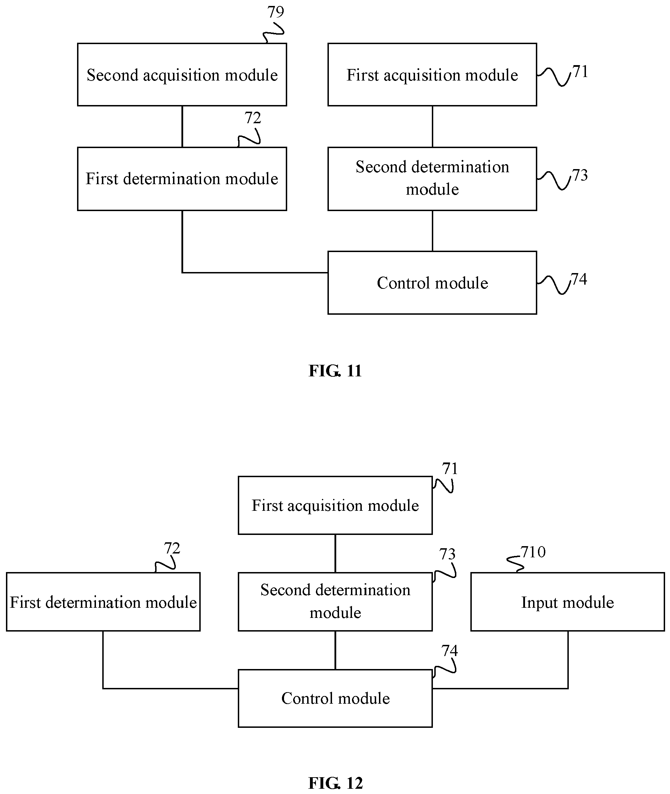

Fig. 11 is a fifth block diagram of a device for controlling a windscreen wiper, according to an exemplary embodiment. Referring to Fig. 11, the device for controlling a windscreen wiper further includes a second acquisition module 79.

The second acquisition module 79 may be configured to acquire a travelling speed of the vehicle, and/or a state of an engine of the vehicle.

The first determination module 72 is further configured to, when the travelling speed of the vehicle is less than or equal to a preset speed, and/or the engine of the vehicle is in a non-started state, determine that the vehicle is in the out-of-service state; and when the travelling speed of the vehicle is greater than the preset speed, and/or the engine of the vehicle is in a started state, determine that the vehicle is in the service state.

According to the device for controlling a windscreen wiper provided by the embodiment of the present disclosure, a physical state of the vehicle may be judged more accurately, the windscreen wiper may be controlled to be raised more accurately under the condition that the vehicle is in the out-of-service state and the environmental temperature is less than or equal to the preset temperature value. As such, the scratch to the windscreen and/or the damage to the windscreen wiper due to freezing of the windscreen wiper on the windscreen are/is effectively avoided.

Fig. 12 is a sixth block diagram of a device for controlling a windscreen wiper, according to an exemplary embodiment. Referring to Fig. 12, the device for controlling a windscreen wiper may further include an input module 710.

The input module 710 may be configured to receive an input starting signal for the engine of the vehicle.

The control module 74 may be further configured to control the windscreen wiper to descend in a direction close to the windscreen according to the starting signal.

According to the device for controlling a windscreen wiper provided by the embodiment of the present disclosure, the windscreen wiper may be controlled to descend in the direction close to the windscreen, such that the windscreen wiper gets close to the windscreen. Thus, the windscreen wiper may wipe away rain, snow, dust and/or the like on the windscreen, normal use of the windscreen wiper is ensured, and a passenger of the vehicle may clearly learn about environment and road condition and the like, so that the driving safety of the vehicle is ensured.

With respect to the devices in the above embodiments, the specific implementations of the operations performed by various modules of the devices have been described in detail in the embodiments regarding the method, and will not be elaborated herein.

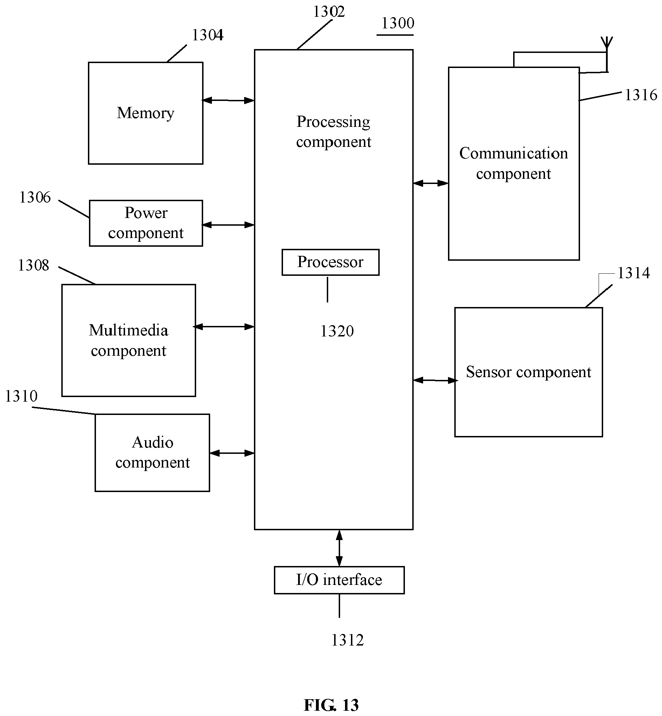

Fig. 13 is a block diagram of a device for controlling a windscreen wiper, according to an exemplary embodiment. For example, the device 1300 for controlling a windscreen wiper may be a mobile phone, a computer, a digital broadcast terminal, a messaging device, a gaming console, a tablet, a medical device, exercise equipment, a personal digital assistant, central control equipment of a vehicle or the like.

Referring to Fig. 13, the device 1300 for controlling a windscreen wiper may include one or more of a processing component 1302, a memory 1304, a power component 1306, a multimedia component 1308, an audio component 1310, an Input/Output (I/O) interface 1312, a sensor component 1314, and a communication component 1316.

The processing component 1302 typically controls overall operations of the device 1300 for controlling a windscreen wiper, such as the operations associated with display, telephone calls, data communications, camera operations, and recording operations. The processing component 1302 may include one or more processors 1320 to execute instructions to perform all or part of the steps in the method for controlling a windscreen wiper. Moreover, the processing component 1302 may include one or more modules which facilitate interaction between the processing component 1302 and the other components. For instance, the processing component 1302 may include a multimedia module to facilitate interaction between the multimedia component 1308 and the processing component 1302.

The memory 1304 is configured to store various types of data to support the operations of the device 1300 for controlling a windscreen wiper. Examples of such data include instructions for any application programs or methods operated on the device 1300 for controlling a windscreen wiper, contact data, phonebook data, messages, pictures, video, etc. The memory 1304 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1306 provides power for various components of the device 1300 for controlling a windscreen wiper. The power component 1306 may include a power management system, one or more power supplies, and other components associated with the generation, management and distribution of power for the device 1300 for controlling a windscreen wiper.

The multimedia component 1308 includes a screen providing an output interface between the device 1300 for controlling a windscreen wiper and a user. In some embodiments, the screen may include a Liquid Crystal Display (LCD) and a Touch Panel (TP). When the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also detect a duration and pressure associated with the touch or swipe action. In some embodiments, the multimedia component 1308 includes a front camera and/or a rear camera. The front camera and/or the rear camera may receive external multimedia data when the device 1300 for controlling a windscreen wiper is in an operation mode, such as a photographing mode or a video mode. Each of the front camera and the rear camera may be a fixed optical lens system or have focusing and optical zooming capabilities.

The audio component 1310 is configured to output and/or input an audio signal. For example, the audio component 1310 includes a Microphone (MIC). The MIC is configured to receive an external audio signal when the device 1300 for controlling a windscreen wiper is in the operation mode, such as a call mode, a recording mode and a voice recognition mode. The received audio signal may be further stored in the memory 1304 or sent through the communication component 1316. In some embodiments, the audio component 1310 further includes a speaker configured to output the audio signal.

The I/O interface 1312 provides an interface between the processing component 1302 and a peripheral interface module, and the peripheral interface module may be a keyboard, a click wheel, a button or the like. The button may include, but not limited to, a home button, a volume button, a starting button and a locking button.

The sensor component 1314 includes one or more sensors configured to provide status assessment in various aspects for the device 1300 for controlling a windscreen wiper. For instance, the sensor component 1314 may detect an on/off status of the device 1300 for controlling a windscreen wiper and relative positioning of components, such as a display and small keyboard of the device 1300 for controlling a windscreen wiper, and the sensor component 1314 may further detect a change in a position of the device 1300 for controlling a windscreen wiper or a change in a position of a component of the device 1300 for controlling a windscreen wiper, presence or absence of contact between the user and the device 1300 for controlling a windscreen wiper, orientation or acceleration/deceleration of the device 1300 for controlling a windscreen wiper and a change in temperature of the device 1300 for controlling a windscreen wiper. The sensor component 1314 may include a proximity sensor configured to detect presence of an object nearby without any physical contact. The sensor component 1314 may also include a light sensor, such as a Complementary Metal Oxide Semiconductor (CMOS) or Charge Coupled Device (CCD) image sensor, configured for use in an imaging application. In some embodiments, the sensor component 1314 may also include an acceleration sensor, a gyroscope sensor, a magnetic sensor, a pressure sensor, a temperature sensor, a humidity sensor, a meteorological sensor and the like.

The communication component 1316 is configured to facilitate wired or wireless communication between the device 1300 for controlling a windscreen wiper and other equipment. The device 1300 for controlling a windscreen wiper may access a communication-standard-based wireless network, such as a Wi-Fi network, a 2nd-Generation (2G) or 3rd-Generation (3G) network or a combination thereof. In an exemplary embodiment, the communication component 1316 receives a broadcast signal or broadcast associated information from an external broadcast management system through a broadcast channel. In an exemplary embodiment, the communication component 1316 further includes an NFC module to facilitate short-range communication. For example, the NFC module may be implemented on the basis of a Radio Frequency Identification (RFID) technology, an Infrared Data Association (IrDA) technology, an Ultra-WideBand (UWB) technology, a BT technology and another technology.

In an exemplary embodiment, the device 1300 for controlling a windscreen wiper may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, which are configured to execute the abovementioned method.

In an exemplary embodiment, there is also provided a non-transitory computer-readable storage medium containing instructions, such as the memory 1304 containing instructions. The instructions may be executed by the processor 1320 of the device 1300 for controlling a windscreen wiper to implement the method for controlling a windscreen wiper. For example, the non-transitory computer-readable storage medium may be a ROM, a Random Access Memory (RAM), a Compact Disc Read-Only Memory (CD-ROM), a magnetic tape, a floppy disc, optical data storage equipment or the like.

Optionally, an embodiment of the present disclosure further provides a vehicle.

The vehicle may include a windscreen wiper and the device for controlling a windscreen wiper illustrated in Fig. 13. The windscreen wiper is connected with the device for controlling a windscreen wiper. The device for controlling a windscreen wiper may execute the method for controlling a windscreen wiper illustrated in any one of Figs. 1 to 6 to control the windscreen wiper.

Other implementations of the present disclosure will be readily conceived by those skilled in the art from consideration of the specification and practice of the present disclosure. This application is intended to cover any variations, uses, or adaptations of the present disclosure following the general principles of the disclosure and including common knowledge and conventional technical means which are not disclosed in the disclosure. It is intended that the specification and embodiments be considered as exemplary only, and a true scope and spirit of the present disclosure are specified by the appended claims.

It will be appreciated that the present disclosure is not limited to the exact construction that has been described above and illustrated in the accompanying drawings, and that various modifications and changes may be made without departing from the scope of the present disclosure. It is intended that the scope of the present disclosure only be defined by the appended claims.

## Claims

1. A method for controlling a windscreen wiper, **characterized by** comprising:
acquiring information about an environment where a vehicle is located, the information about the environment where the vehicle is located comprising: information about an environmental temperature (S11);
determining whether the vehicle is in a service state or an out-of-service state (S12);
determining whether the environmental temperature is less than or equal to a preset temperature value according to the information about the environmental temperature (S13); and
when the vehicle is in the out-of-service state and the environmental temperature is less than or equal to the preset temperature value, controlling the windscreen wiper of the vehicle to be raised in a direction away from a windscreen of the vehicle (S14).

2. The method for controlling a windscreen wiper of claim 1, wherein the information about the environment where the vehicle is located further comprises: information about an environmental humidity;
and wherein before controlling the windscreen wiper of the vehicle to be raised in the direction away from the windscreen of the vehicle when the vehicle is in the out-of-service state and the environmental temperature is less than or equal to the preset temperature value, the method further comprises:
determining whether the environmental humidity is more than or equal to a preset humidity value according to the information about the environmental humidity (S24); and
correspondingly, controlling the windscreen wiper of the vehicle to be raised in the direction away from the windscreen of the vehicle when the vehicle is in the out-of-service state and the environmental temperature is less than or equal to the preset temperature value comprises:
when the vehicle is in the out-of-service state, the environmental temperature is less than or equal to the preset temperature value and the environmental humidity is more than or equal to the preset humidity value, controlling the windscreen wiper to be raised in the direction away from the windscreen (S25).

3. The method for controlling a windscreen wiper of claim 1, wherein the information about the environment where the vehicle is located further comprises: weather information;
and wherein before controlling the windscreen wiper of the vehicle to be raised in the direction away from the windscreen of the vehicle when the vehicle is in the out-of-service state and the environmental temperature is less than or equal to the preset temperature value, the method further comprises:
determining whether rainy or snowy weather exists in a time period corresponding to the weather information according to the weather information (S34); and
correspondingly, controlling the windscreen wiper of the vehicle to be raised in the direction away from the windscreen of the vehicle when the vehicle is in the out-of-service state and the environmental temperature is less than or equal to the preset temperature value comprises:
when the vehicle is in the out-of-service state, the environmental temperature is less than or equal to the preset temperature value and the rainy or snowy weather exists in the time period corresponding to the weather information, controlling the windscreen wiper to be raised in the direction away from the windscreen (S35).

4. The method for controlling a windscreen wiper of claim 1, wherein the information about the environment where the vehicle is located further comprises: the information about the environmental humidity and the weather information;
and wherein before controlling the windscreen wiper of the vehicle to be raised in the direction away from the windscreen of the vehicle when the vehicle is in the out-of-service state and the environmental temperature is less than or equal to the preset temperature value, the method further comprises:
determining whether the environmental humidity is more than or equal to the preset humidity value according to the information about the environmental humidity (S44), and
determining whether the rainy or snowy weather exists in the time period corresponding to the weather information according to the weather information (S45); and
correspondingly, controlling the windscreen wiper of the vehicle to be raised in the direction away from the windscreen of the vehicle when the vehicle is in the out-of-service state and the environmental temperature is less than or equal to the preset temperature value comprises:
when the vehicle is in the out-of-service state, the environmental temperature is less than or equal to the preset temperature value, the environmental humidity is more than or equal to the preset humidity value and the rainy or snowy weather exists in the time period corresponding to the weather information, controlling the windscreen wiper to be raised in the direction away from the windscreen (S46).

5. The method for controlling a windscreen wiper of any one of claims 1-4, wherein acquiring the information about the environment where the vehicle is located comprises:
acquiring the information, acquired by a sensor of the vehicle, about the environment where the vehicle is located; or
acquiring the information, sent by terminal equipment, about the environment where the vehicle is located.

6. The method for controlling a windscreen wiper of any one of claims 1-4, wherein determining whether the vehicle is in the service state or the out-of-service state comprises:
acquiring a travelling speed of the vehicle, and/or a state of an engine of the vehicle;
when the travelling speed of the vehicle is less than or equal to a preset speed, and/or the engine of the vehicle is in a non-started state, determining that the vehicle is in the out-of-service state; and
if the travelling speed of the vehicle is greater than the preset speed, and/or the engine of the vehicle is in a started state, determining that the vehicle is in the service state.

7. The method for controlling a windscreen wiper of any one of claims 1-4, further comprising:
receiving an input starting signal for the engine of the vehicle; and
controlling the windscreen wiper to descend in a direction close to the windscreen according to the starting signal.

8. A device for controlling a windscreen wiper, **characterized by** comprising:
a first acquisition module (71), configured to acquire information about an environment where a vehicle is located, the information about the environment where the vehicle is located comprising: information about an environmental temperature;
a first determination module (72), configured to determine whether the vehicle is in a service state or an out-of-service state;
a second determination module (73), configured to determine whether the environmental temperature is less than or equal to a preset temperature value according to the information about the environmental temperature; and
a control module (74), configured to, when the vehicle is in the out-of-service state and the environmental temperature is less than or equal to the preset temperature value, control the windscreen wiper of the vehicle to be raised in a direction away from a windscreen of the vehicle.

9. The device for controlling a windscreen wiper of claim 8, wherein the information about the environment where the vehicle is located further comprises information about an environmental humidity; and the device for controlling a windscreen wiper further comprises:
a third determination module (75), configured to determine whether the environmental humidity is more than or equal to a preset humidity value according to the information about the environmental humidity; and
the control module (74) is further configured to, when the vehicle is in the out-of-service state, the environmental temperature is less than or equal to the preset temperature value and the environmental humidity is more than or equal to the preset humidity value, control the windscreen wiper to be raised in the direction away from the windscreen.

10. The device for controlling a windscreen wiper of claim 8, wherein
the information about the environment where the vehicle is located further comprises:
weather information; and the device for controlling a windscreen wiper further comprises:
a fourth determination module (76), configured to determine whether rainy or snowy weather exists in a time period corresponding to the weather information according to the weather information; and the control module (74) is further configured to, when the vehicle is in the out-of-service state, the environmental temperature is less than or equal to the preset temperature value and the rainy or snowy weather exists in the time period corresponding to the weather information, control the windscreen wiper to be raised in the direction away from the windscreen; or
the information about the environment where the vehicle is located further comprises: the information about the environmental humidity and the weather information; and the device for controlling a windscreen wiper further comprises: a fifth determination module (77), configured to determine whether the environmental humidity is more than or equal to the preset humidity value according to the information about the environmental humidity, and a sixth determination module (78), configured to determine whether the rainy or snowy weather exists in the time period corresponding to the weather information according to the weather information; and the control module (74) is further configured to, when the vehicle is in the out-of-service state, the environmental temperature is less than or equal to the preset temperature value, the environmental humidity is more than or equal to the preset humidity value and the rainy or snowy weather exists in the time period corresponding to the weather information, control the windscreen wiper to be raised in the direction away from the windscreen.

11. The device for controlling a windscreen wiper of any one of claims 8-10, wherein
the first acquisition module (71) is further configured to acquire the information, acquired by a sensor of the vehicle, about the environment where the vehicle is located, or acquire the information, sent by terminal equipment, about the environment where the vehicle is located.

12. The device for controlling a windscreen wiper of any one of claims 8-10, further comprising:
a second acquisition module (79), configured to acquire a travelling speed of the vehicle, and/or a state of an engine of the vehicle, wherein
the first determination module (72) is further configured to, when the travelling speed of the vehicle is less than or equal to a preset speed, and/or the engine of the vehicle is in a non-started state, determine that the vehicle is in the out-of-service state, and when the travelling speed of the vehicle is greater than the preset speed, and/or the engine of the vehicle is in a started state, determine that the vehicle is in the service state.

13. The device for controlling a windscreen wiper of any one of claims 8-10, further comprising:
an input module (710), configured to receive an input starting signal for the engine of the vehicle, wherein
the control module (74) is further configured to control the windscreen wiper to descend in a direction close to the windscreen according to the starting signal.

14. An apparatus for controlling a windscreen wiper, **characterized by** comprising:
a processor; and
a memory configured to store instructions executable for the processor,
wherein the processor is configured to:
acquire information about an environment where a vehicle is located, the information about the environment where the vehicle is located comprising: information about an environmental temperature;
determine whether the vehicle is in a service state or an out-of-service state;
determine whether the environmental temperature is less than or equal to a preset temperature value according to the information about the environmental temperature; and
when the vehicle is in the out-of-service state and the environmental temperature is less than or equal to the preset temperature value, control the windscreen wiper of the vehicle to be raised in a direction away from a windscreen of the vehicle.

15. A vehicle, comprising: a windscreen wiper and the apparatus for controlling a windscreen wiper of claim 14, the windscreen wiper being connected with the apparatus.
